# EUROPEAN PATENT APPLICATION

(11) **EP 3 926 913 A1**
(43) Date of publication of application: **22.12.2021**
(21) Application number: 20180225.3
(22) Date of filing: 16.06.2020
(51) Int. Cl.: H04L 29/06, H04L 9/32

(54) **MANAGING ACCESS OF A CLIENT DEVICE TO AN ENTITY**

(71) Applicant: Siemens Aktiengesellschaft, 80333 München (DE)
(72) Inventor: Bogner, Andreas, 81829 München (DE); Friedrich, Raphael, 81541 München (DE)

(57) **Abstract**

The disclosure relates to a method for managing access of a client device (C) to an entity (FS, WS), comprising the steps:
- Storing (S1) a first data set (IDS) comprising access control policies and a second data set (2DS) comprising information attributes in at least one ledger element (LE) comprised by at least one node element (NE) of a distributed ledger system (DLS),
- receiving (S2) data supporting a decision regards the access of the client device (C) to the entity (FS, WS) from the client device (C) by at least one policy enforcement module (PEP),
- forwarding (S3) the data to the at least one node element (NE),
- determining (S4) a decision by the at least one node element (NE) using the first data set (IDS), the second data set (2SD), and the data, and
- managing (S5) the access of the client device (C) to the entity (FS, WS) based on the decision.

## Description

### Field of the Invention

The aspects disclosed herein relate to a computer-implemented method for managing access of a client device to an entity and a related distributed ledger system.

### Background of the Invention

Access control is a main component of every IT landscape, especially an IT system, an IT data file directory or an IT application.

State of the art attribute-based access control architectures to an IT landscape are composed of several central components, inter alia:
- a Policy Enforcement Point (PEP),
- a Policy Decision Point (PDP),
- a Policy Information Point (PIP),
- a Policy Administration Point (PAP), and
- a Policy Repository (PR).

Those components must be fed with data of different sources like an active directory, an HR system, an asset management system, and more, as well as the policy under which conditions access is granted in order to make reliable statements about access decisions.

According to one aspect of attribute-based access control architectures, access to a recruiting application shall only be granted for users who meet the following requirements:
- working at HR department,
- access the recruiting application from an enterprise managed device, and
- have passed a data protection training.

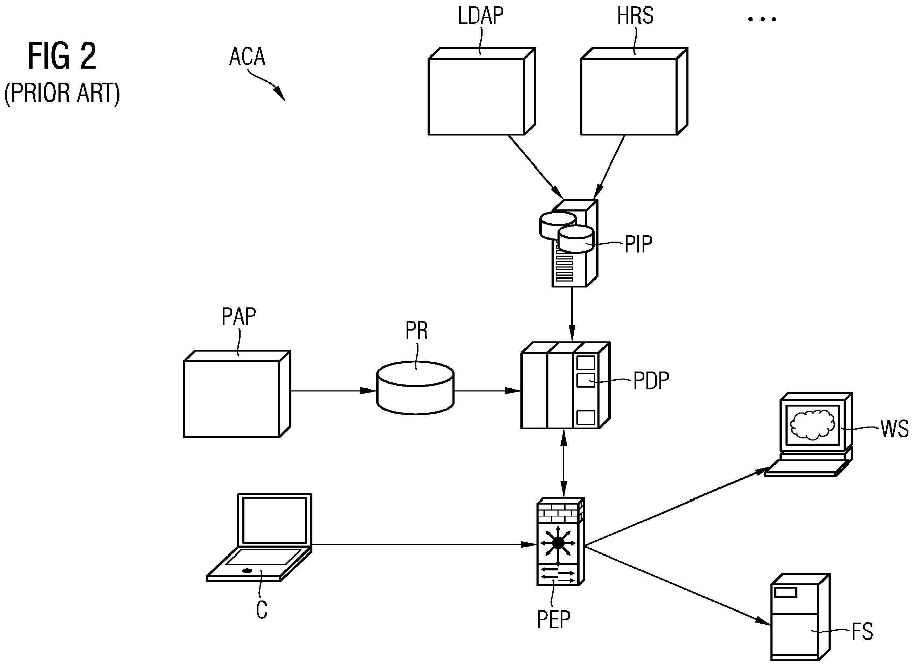

A figure (Figure 2), which depicts a possible realisation of an attribute-based access control architecture is given in the description of the drawings.

According to one aspect of an application of the invention a client which tries to connect to a web server must be authorized by the PEP. The decision whether the client is allowed to access is taken by the PDP. For doing so, the PDP needs information from different source, which are collected by the PIP as well as the relevant policy. Alternative the mentioned web server other technical systems or technical devices can be target of the connection by the client.

State of the art attribute-based access control architectures have the disadvantage that they have several points of failure. The points of failure are addressed in state-of-the-art solutions by harden the isolation of attribute-based access control architectures and reduce the probability of the success of an attack.

It is a problem of the invention to provide a solution to reduce risks involved in attribute-based access control architectures.

### Summary

Aspects herein generally relate to a computer-implemented method for managing access of a client device to an entity. In one aspect, the method including the steps of:
- Storing a first data set and a second data set in at least one ledger element, wherein the first data set comprises access control policies, and wherein the second data set comprises information attributes, wherein the at least one ledger element is comprised by at least one node element of a distributed ledger system,
- receiving a third data set from the client device by at least one policy enforcement module, wherein the third data set includes data supporting a decision regards the access of the client device to the entity,
- forwarding the third data set to the at least one node element,
- determining a decision by the at least one node element using the first data set, the second data set, and the third data set,
- managing the access of the client device to the entity based on the decision by the at least one policy enforcement module.

According to the invention by means of a distributed ledger system the state-of-the-art precondition of trust in central components can be omitted. Furthermore, such a distributed approach leads to a higher availability guarantee during an attack on data and systems. The disadvantages of the state-of-art that central components can be a single point of failure, that trust depends nearly solely on central components, and that administration of central components are addressed and solved by the aspects disclosed.

By means of the distributed ledger system no single point of failure beyond the policy enforcement module exists anymore. The policy enforcement module can query any PDP, node element in the context of the invention, and is guaranteed to receive the same information, especially decision, from each node element.

Furthermore, security can be improved by this decentralized approach. A policy enforcement module can ask multiple node elements for its decision whether access shall be granted or not. An attacker does not have a single target anymore. For a successful attack an adversary must compromise a significant number of node elements. This improves the security of the data stored in the leger elements.

One further advantage of the aspects disclosed is that the immutability of the ledger element provides a full historical record of states of the distributed ledger system. This enables the distributed ledger system to reliably reproduce any answer and/or decision it would have given at any previous point in time. Thus, one can analyse past incidents at the hand of cryptographical proofs for past decisions. Storing a first data set and a second data set in at least one ledger element preferably includes that all information needed, access control policies as well as information attributes, is distributed over all node elements and stored in the ledger element. The node elements are configured to communicate with each other and synchronize new information. Node elements are configured to communicate and synchronize new information via P2P synchronization (P2P Sync). New information from extern of the distributed ledger system can be pushed into the distributed ledger system by means of application programming interfaces (APIs). According to one aspect of the invention, the HR system external the distributed ledger system could push information about a new employee and his/her department into the distributed ledger system and a node element. In an advantage aspect of the invention the ledger system is authenticated before pushing information into the distributed ledger system and a node element. In the node element the information would be stored in the ledger. This information would then be distributed between the ledger of different node elements by means of P2P synchronization. This P2P synchronization has the advantage of a strong integrity protection by virtue of the distributed ledger system's consensus protocol.

Receiving a third data set from the client device by at least one policy enforcement module preferably includes that the at least one policy enforcement module receives a request from a client using the client device.

The policy enforcement module can then invoke a node element over an API (application programming interface). This is preferably included by forwarding the third data set to the at least one node element. Within the request from the client using the client device, information (third data set) is provided. The information is passed to the node element and/or a protocol, especially a smart contract, employed by the node element.

Determining a decision by the at least one node element using the first data set, the second data set, and the third data set preferably includes that within the protocol, advantageously with the smart contract, the decision whether access is granted or denied to the client is made by means of the implemented logic, context of the request and the information stored on the ledger element. Advantageously, this decision is then sent to the policy enforcement module which is responsible for enforcing of the policy.

Managing the access of the client device to the entity based on the decision by the at least one policy enforcement module preferably includes giving access or denying access to the client device and/or enforcing the policy.

In a further aspect, the entity to which the access is managed is a technical device and/or a server and/or a technical resource and/or a service and/or a data storage and/or a web server and/or a network and/or a file server and/or an application. This has the advantage that the enclosed method can be used to manage access to different kinds of systems.

In a further aspect, the third data set includes a client identifier (which is identifying the client) and/or a client authorization and/or a device identifier (which is identifying the device)and/or a request context and/or at least one client attribute and/or an entity identifier (which is identifying the entity). This has the advantage that different information included in the third data set can be included in the decision whether access is granted or denied.

In a further aspect, the distributed ledger system is stored in at least one computational device and/or on at least one memory element. This has the advantage that data and information stored in the distributed ledger system is available at the at least one computational device and/or on the at least one memory element and/or at multiple computational devices and/or memory elements.

In a further aspect, the at least one policy enforcement module is stored in at least one computational device and/or on at least one memory element. This means that the at least one policy enforcement module is preferable comprised by at least one computational device and/or by at least one memory element. The at least one computational device and/or the at least one memory element can also be referred to as resource.

This aspect includes the option that the at least one policy enforcement module is configured only once centrally for the whole distributed ledger system.

Additionally, this aspect includes the further option that the at least one policy enforcement module is not configured centrally for the whole distributed ledger system but that the at least one policy enforcement module is configured at each resource. In this further option several resources include the distributed ledger system, one policy enforcement module, and possibly also the application access is granted by the policy enforcement module.

This further aspect has the advantage that the policy enforcement module is put directly at each resource or at each application comprised. This has the advantage of providing an architecture with the opportunity to establish an attribute-based access control without the need of any further system.

In a further aspect, the information attributes comprise client information and/or categorical information. The categorical information preferably comprises company information, organizational information, a segmentation of clients and/or group information of clients. This has the advantage that different information included in the third data set can be included in the decision whether access is granted or denied.

In a further aspect, the at least one policy enforcement module is configured to collect a request from the client device. This has the advantage that the request is collected by the policy enforcement module and can be forwarded to the at least one node element.

In a further aspect, the at least one node element is configured as at least one blockchain node. In a further aspect, the distributed ledger system is a blockchain system. The advantage of these aspects is that features comprised by blockchain technology can be applied.

In a further aspect, the distributed ledger system comprises at least one further node element. The at least one node element is configured to establish a data connection with the at least one further node element and/or the at least one further node element is configured to establish a data connection with the at least one node element. This has the advantage that a data connection between multiple node elements can be established. The data connection has the advantage that data can be exchanged and/or distributed between node elements.

In a further aspect, the at least one node element is configured to determine the decision using at least one computer protocol, wherein the computer protocol is configured to verify and/or enforce a negotiation or performance of a contract related to the access control policies. The computer protocol can be referred to as smart contract. This has the advantage that a functionality of a PDP (policy decision point) is provided by the at least one node element. For a distributed ledger system configured as a blockchain the computer protocol can be configured as a smart contract. In other words, the logic whether access to the entity will be granted to the client device is implemented by smart contracts and the input (first data set preferably comprising access control policies and a second data set preferably comprising information attributes) for the calculation is stored in the ledger element. The advantage of this aspect is that features comprised by blockchain technology can be applied.

In a further aspect, the first data set and the second data set are provided to the at least one ledger element by a first application programming interface (API). In a further aspect, the second data set is provided via a Lightweight Directory Access Protocol (LDAP).

In a further aspect, the at least one policy enforcement module is configured to connect with the at least one node element by a second application programming interface (API). This has the advantage that data and/or information can be exchanged and/or distributed between the at least one policy enforcement module and the at least one node element.

According to a further aspect a distributed ledger system for managing access of a client device to an entity is provided. The distributed ledger system comprises:
- A first data set, wherein the first data set comprises access control policies,
- a second data set, wherein the second data set comprises information attributes,
- at least one ledger element, wherein the at least one ledger element is configured to store the first data set and the second data set,
- at least one node element, wherein the at least one node element comprises the at least one ledger element, wherein the at least one ledger element is configured to determine a decision using the first data set, the second data set, and a third data set, and wherein the third data set includes data supporting the decision regards the access of the client device to the entity,
- at least one policy enforcement module, wherein the at least one policy enforcement module is configured to receive the third data set from the client device, to forward the client data to the at least one node element, and to manage the access of the client device to the entity based on the decision.

According to an aspect the at least one policy enforcement module is either comprised by the at least one node element or is comprised as a central policy enforcement module by the distributed ledger system external of the at least one node element.

A policy enforcement module comprised by the at least one node element has the advantage that the policy enforcement module is put directly at each resource or at each application comprised by the node element. A central policy enforcement module for all node elements is an alternative option, but no precondition.

In a further aspect, the distributed ledger system is used in the method for managing access of the client device to the entity.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various aspects, it should be understood that many changes and modifications can be made to the described aspects. It is therefore intended that the foregoing description be regarded as illustrative rather than limiting, and that it be understood that all equivalents and/or combinations of aspects are intended to be included in this description.

### Brief Description of the Drawings

- Fig. 1: shows a flow diagram of the method for managing access of a client device to an entity,
- Fig. 2: shows a state-of-the-art attribute-based access control architecture,
- Fig. 3: shows a distributed-ledger-based attribute-based access control architecture,
- Fig. 4: shows a distributed ledger system for access control, and
- Fig. 5: shows a policy enforcement module and distributed ledger system comprised by a resource.

### Detailed Description of the Drawings

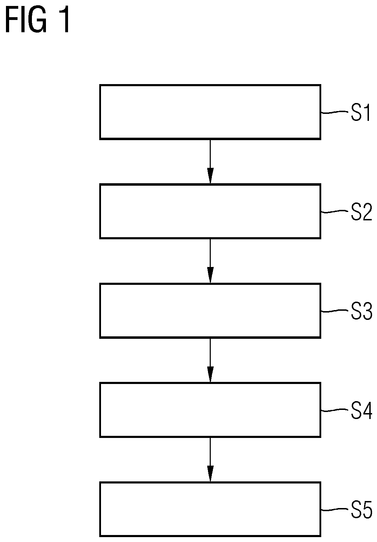

Fig. 1 shows a flow diagram of the method for managing access of a client device to an entity. The method comprises the steps:
- Step S1: Storing a first data set and a second data set in at least one ledger element, wherein the first data set comprises access control policies, and wherein the second data set comprises information attributes, wherein the at least one ledger element is comprised by at least one node element of a distributed ledger system,
- Step S2: receiving a third data set from the client device by at least one policy enforcement module, wherein the third data set includes data supporting a decision regards the access of the client device to the entity,
- Step S3: forwarding the third data set to the at least one node element,
- Step S4: determining a decision by the at least one node element using the first data set, the second data set, and the third data set, and
- Step S5: managing the access of the client device to the entity based on the decision by the at least one policy enforcement module.

Fig. 2 shows a state-of-the-art attribute-based access control architecture ACA to an IT landscape. State-of-the-art attribute-based access control architectures ACA are composed of several central components, inter alia:
- a Policy Enforcement Point PEP,
- a Policy Decision Point PDP,
- a Policy Information Point PIP,
- a Policy Administration Point PAP, and
- a Policy Repository PR.

The Policy Enforcement Point PEP can also be referred to as policy enforcement module PEP.

The central components must be fed with data of different sources like an active directory LDAP, an HR system HRS, an asset management system, and more, as well as the policy, which is store in the Policy Repository PR, under which conditions access is granted in order to make reliable statements about access decisions.

According to one aspect of the attribute-based access control architecture ACA, access to a recruiting application shall only be granted for users who meet the following requirements:
- working at HR department,
- access the recruiting application from an enterprise managed device, and
- have passed a data protection training.

A client C which tries to connect to a web server WS and/or a file server FS (in general an entity) must be authorized by the Policy Enforcement Point PEP. The decision whether the client C is allowed to access is taken by the Policy Decision Point PDP. For doing so, the Policy Decision Point PDP needs information from different source, which are collected by the Policy Information Point PIP as well as the relevant policy from the Policy Repository PR.

The Policy Administration Point PAP can manage and/or change policies stored in the Policy Repository PR.

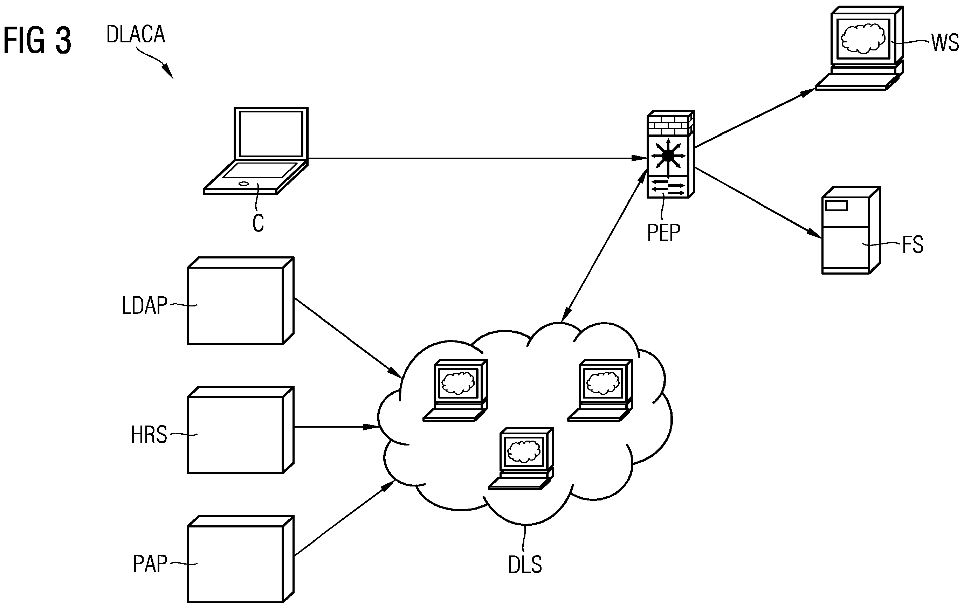

Fig. 3 shows a distributed-ledger-based attribute-based access control architecture DLACA for executing a method shown in Fig. 1. A client C requests access to a web server WS and/or a file system FS (in general an entity) at a Policy Enforcement Point PEP via a client device. With the request the client C delivers a data set including a client identifier and/or a client authorization and/or a device identifier and/or a request context and/or at least one client attribute. With the request the data set from the client is received by at least one policy enforcement module (Policy Enforcement Point PEP) according to Step S2 (shown in Fig. 1), wherein the third data set includes data supporting a decision regards the access of the client device to the entity (web server WS and/or a file system FS).

The Policy Enforcement Point PEP forwards the request and the data set to a distributed ledger system DLS according to step S3 shown in Fig. 1. The distributed ledger system DLS has stored information (first data set and second data set) from an active directory LDAP (second data set), an HR system HRS (second data set), and a Policy Administration Point PAP. The information is stored in advance according to step S1 shown in Fig. 1 (Storing a first data set and a second data set in at least one ledger element, wherein the first data set comprises access control policies, and wherein the second data set comprises information attributes, wherein the at least one ledger element is comprised by at least one node element of a distributed ledger system). The Policy Administration Point PAP supplies policies (first data set) under which conditions access to the web server WS and/or file server FS (entity) is granted in order to make reliable statements about access decisions.

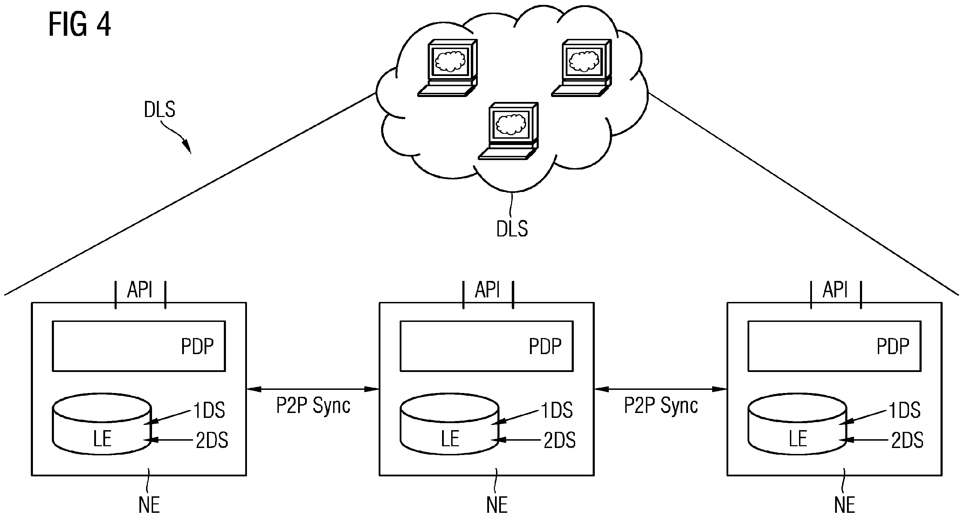

Components of the distributed ledger system DLS are explained in Fig. 4.

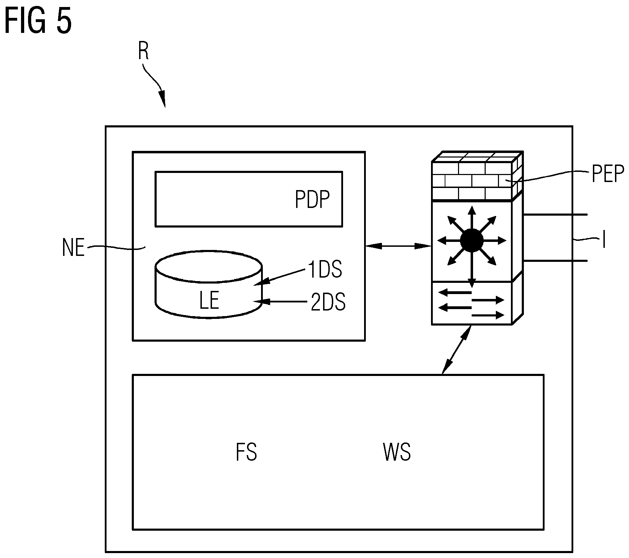

The Policy Enforcement Point PEP in Fig. 3 is configured centrally for the whole distributed ledger system DLS. An alternative is to configure a Policy Enforcement Point PEP for each resource as shown in Fig. 5. The Policy Enforcement Point PEP is configured to manage the access of the client device to the entity based on the decision by the at least one policy enforcement module according to Step S5 of Fig. 1.

Fig. 4 shows a distributed ledger system DLS for access control. Three node element NE are shown for the distributed ledger system DLS. In praxis a distributed ledger system DLS can comprise many more node elements NE.

Each node element NE comprises a leger element LE. In each ledger element LE a first data set 1DS and a second data set 2DS is stored. The first data set comprises access control policies under which conditions access to the web server WS and/or file server FS is granted in order to make reliable statements about access decisions. The second data set comprises information attributes. Each node element further has the function of a Policy Decision Point PDP. This can be realized by smart contracts. This means that, the logic whether access to the file server or web server will be granted to the client is implemented by smart contracts and the input (first data set comprising access control policies and a second data set comprising information attributes) for the calculation is stored in the ledger element LE. The Policy Enforcement Point PEP of the at least one node element is configured to determine a decision using the first data set, the second data set, and the third data set according to Step S4 of Fig. 1.

The node elements NE are configured to communicate with each other and synchronize new information. New information can be part of the first data set 1DS and the second data set 2DS. Node elements NE are configured to communicate and synchronize new information via P2P Sync. New information from extern of the distributed ledger system DLS can be pushed into the distributed ledger system DLS by means of application programming interfaces APIs.

Fig. 5 shows a Policy Enforcement Point PEP, also referred to as policy enforcement module, and a distributed ledger system (symbolised by a single node element NE) comprised by a resource R.

The Policy Enforcement Point PEP is not configured centrally for the whole distributed ledger system (as in Fig. 3) but at each resource. In this option multiple resources R include the distributed ledger system, one Policy Enforcement Point PEP, and possibly also the application, especially a file server FS and/or a web server WS, access is granted by the Policy Enforcement Point PEP.

This has the advantage that the Policy Enforcement Point PEP is put directly at each resource R or at each application comprised. This has the advantage of providing an architecture with the opportunity to establish an attribute-based access control without the need of any further system.

As in Fig. 4, each node element NE comprises a leger element LE. In each ledger element LE a first data set 1DS and a second data set 2DS is stored. The first data set comprises access control policies under which conditions access to the web server WS and/or file server FS is granted in order to make reliable statements about access decisions. The second data set comprises information attributes. Each node element further has the function of a Policy Decision Point PDP. This can be realized by smart contracts. This means that, the logic whether access to the file server or web server will be granted to the client is implemented by smart contracts and the input (first data set comprising access control policies and a second data set comprising information attributes) for the calculation is stored in the ledger element LE.

Although the invention has been explained in relation to its advantageous aspects as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1DS: first data set
- 2DS: second data set
- ACA: state-of-the-art attribute-based access control architecture
- API: application programming interface
- C: client (device)
- DLACA: distributed ledger access control architecture
- DLS: distributed ledger system
- FS: file server
- LDAP: active directory
- LE: ledger element
- HRS: HR system
- NE: node element
- R: resource
- Si: step i, i = {[1; 5]
- PAP: Policy Administration Point
- PDP: Policy Decision Point
- PEP: Policy Enforcement Point
- PIP: Policy Information Point
- PR: Policy Repository
- WS: web server

## Claims

1. Computer-implemented method for managing access of a client device (C) to an entity (FS, WS), comprising the steps:
- Storing (S1) a first data set (1DS) and a second data set (2DS) in at least one ledger element (LE), wherein the first data set (1DS) comprises access control policies, and wherein the second data set (2DS) comprises information attributes, wherein the at least one ledger element (LE) is comprised by at least one node element (NE) of a distributed ledger system (DLS),
- receiving (S2) a third data set from the client device (C) by at least one policy enforcement module (PEP), wherein the third data set includes data supporting a decision regards the access of the client device (C) to the entity (FS, WS),
- forwarding (S3) the third data set to the at least one node element (NE),
- determining (S4) a decision by the at least one node element (NE) using the first data set (1DS), the second data set (2SD), and the third data set, and
- managing (S5) the access of the client device (C) to the entity (FS, WS) based on the decision by the at least one policy enforcement module (PEP).

2. Method according to claim 1,
**wherein** the entity is:
- a technical device and/or
- a server and/or
- a technical resource and/or
- a service and/or
- a data storage and/or
- a web server (WS) and/or
- a network and/or
- a file server (FS) and/or
- an application.

3. Method according to one of the previous claims,
**wherein** the third data set includes:
- a client identifier and/or
- a client authorization and/or
- a device identifier and/or
- a request context and/or
- at least one client attribute and/or
- an entity identifier.

4. Method according to one of the previous claims,
**wherein** the distributed ledger system (DLS) is stored in at least one computational device and/or on at least one memory element(R) .

5. Method according to one of the previous claims,
**wherein** the at least one policy enforcement module is stored in at least one computational device and/or on at least one memory element (R).

6. Method according to one of the previous claims,
**wherein** the information attributes comprise client information and/or categorical information.

7. Method according to one of the previous claims,
**wherein** the at least one policy enforcement module (PEP) is configured to collect a request from the client device (C).

8. Method according to one of the previous claims,
**wherein** the at least one node element (NE) is configured as at least one blockchain node.

9. Method according to one of the previous claims,
**wherein** the distributed ledger system (DLS) is a blockchain system.

10. Method according to one of the previous claims,
**wherein** the distributed ledger system (DLS) comprises at least one further node element (NE), and wherein:
- the at least one node element (NE) is configured to establish a data connection with the at least one further node element (NE) and/or
- the at least one further node element (NE) is configured to establish a data connection with the at least one node element (NE).

11. Method according to one of the previous claims,
**wherein** the at least one node element (NE) is configured to determine the decision using at least one computer protocol, wherein the computer protocol is configured to verify and/or enforce a negotiation or performance of a contract related to the access control policies.

12. Method according to one of the previous claims,
**wherein** the first data set (1DS) and the second data set (2DS) are provided to the at least one ledger element (LE) by a first application programming interface (API).

13. Method according to one of the previous claims,
**wherein** the at least one policy enforcement module (PEP) is configured to connect with the at least one node element (NE) by a second application programming interface (API).

14. Distributed ledger system (DLS) for managing access of a client device (C) to an entity (WS, FS), comprising:
- A first data set (1DS), wherein the first data set (1DS) comprises access control policies,
- a second data set (2DS), wherein the second data set (2DS) comprises information attributes,
- at least one ledger element (LE), wherein the at least one ledger element (LE) is configured to store the first data set (1DS) and the second data set (2DS),
- at least one node element (NE), wherein the at least one node element (NE) comprises the at least one ledger element (LE), wherein the at least one ledger element (LE) is configured to determine a decision using the first data set (1DS), the second data set (2DS), and a third data set, and wherein the third data set includes data supporting the decision regards the access of the client device (C) to the entity (WS, FS),
- at least one policy enforcement module (PEP), wherein the at least one policy enforcement module (PEP) is configured to receive the third data set from the client device (C), to forward the client data (C) to the at least one node element (NE), and to manage the access of the client device (C) to the entity (WS, FS) based on the decision.

15. Distributed ledger system (DLS) according to claim 14 used in the method according to one of the claims 1 to 13 for managing access of the client device (C) to the entity (WS, FS) .
